# EUROPÄISCHE PATENTSCHRIFT

(11) **EP 0 669 241 B1**
(45) Veröffentlichungstag und Bekanntmachung des Hinweises auf die Patenterteilung: **28.04.1999**
(21) Anmeldenummer: 95102059.3
(22) Anmeldetag: 15.02.1995
(51) Int. Cl.: B60T 13/16, B60T 11/224

(54) **Zweistufiges Bremsventil**
Two stage brake valve
Valve de freinage à deux étages

(30) Priorität: 25.02.1994 US 201548
(43) Veröffentlichungstag der Anmeldung: 30.08.1995
(73) Patentinhaber: Deere & Company, Moline, Illinois 61265-8098 (US)
(72) Erfinder: Durant, Douglas Michael, Waterloo, Iowa 50701 (US)
(74) Vertreter: Feldmann, Bernhard

(56) Entgegenhaltungen:
- US-A- 3 764 183
- US-A- 4 738 109

## Beschreibung

Die Erfindung betrifft ein zweistufiges Bremsventil gemäß den gattungsbildenden Merkmalen des Patentanspruchs 1.

Die US-A-4,738,109 beschreibt ein gattungsgemäßes zweistufiges Bremsventil, welches auch dann funktionsfähig ist, wenn kein Pumpendruck an dem Pumpeneinlaß des Bremsventils anliegt. Dies wird durch eine zweistufige Ventilanordnung erreicht, die einen Vorfüllkolben und einen Hochdruckkolben enthält. Der Vorfüllkolben liefert ein großes Ölvolumen bei kleinem Hydraulikdruck, um die Komponenten der Hinterachsbremse zur Anlage zu bringen. Wenn dies geschehen ist, geht das Bremsventil von dem großen Vorfüllkolbendurchmesser auf einen kleinen Hochdruckkolbendurchmesser über, mit dem der für das Bremsen erforderliche höhere Druck erzeugt wird.

Wenn Pumpendruck an dem Pumpeneinlaß des Bremsventils anliegt, ist bei der Betätigung des Bremsventils (Vorfüllkolben/Hochdruckkolben) lediglich ein kleiner Betätigungsweg zwischen der Neutralstellung und der Druckaufbaustellung, in der der Bremsmechanismus gefüllt wird, erforderlich. Während dieses Betätigungsweges wird jedoch Flüssigkeit in der Vorfüllkammer eingeschlossen, so daß sich ein Druck ausbildet, der ein schweres Pedalgefühl verursacht. Das schwere, auf die Druckdämpfung der Vorfüllkammer zurückzuführende, Pedalgefühl und die damit verbundene Erhöhung der für das Anlegen des Bremsmechanismus erforderlichen Pedalkraft führen zu einer Verschlechterung der Regulierbarkeit des Bremsdrucks. Das schwere Pedalgefühl ist bei kalten Witterungsbedingungen wegen der dann vorliegenden erhöhten Druckdämpfung stärker spürbar.

Die der Erfindung zugrunde liegende Aufgabe wird darin gesehen, ein Bremsventil anzugeben, durch die die genannten Probleme und Nachteile überwunden werden. Insbesondere soll das beschriebene schwere Pedalgefühl vermieden werden.

Die Aufgabe wird erfindungsgemäß durch die Lehre des Patentanspruchs 1 gelöst.

Das erfindungsgemäße zweistufige Bremsventil enthält einen Einlaß, über den es unter Druck stehende Bremsflüssigkeit von einer Pumpe erhält, einen Vorratsbehälteranschluß, eine Stufenbohrung und ein Stufenkolbenteil. Das Stufenkolbenteil besteht aus einem Vorfüllkolben mit großem Durchmesser und einem Hochdruckkolben kleineren Durchmessers. Das Stufenkolbenteil läßt sich aus einer Ruhelage in eine Lage bewegen, in der Flüssigkeit an einen Bremsmechanismus gefördert wird. Die Stufenbohrung und das Stufenkolbenteil schließen eine Vorfüllkammer größeren Volumens und eine Hochdruckkammer ein. Der Hochdruckkolben weist eine Nut auf seinem Umfang auf, die über Kanäle mit dem Bremsmechanismus verbunden ist. Zwischen der Nut und dem Einlaß wird dann ein Durchgang frei gegeben, wenn der Hochdruckkolben um eine bestimmte Wegstrecke aus seiner Ruhelage in eine Richtung bewegt wird, bei der Flüssigkeit von der Hochdruckkammer zu dem Bremsmechanismus gefördert wird. Der Vorfüllkolben hat eine Dichtungsringschulter und eine zweite Ringschulter zwischen denen ein Dichtungsring angeordnet ist, welcher gleitend von der Stufenbohrung aufgenommen wird und an dieser dichtend anliegt. Die Dichtungsringschulter greift dann dichtend an dem Dichtungsring an, wenn der Vorfüllkolben aus der Ruhelage bewegt wird, um Flüssigkeit aus der Vorfüllkammer zum Bremsmechanismus zu fördern. Erfindungsgemäß ist in der Ruhestellung des Stufenkolbenteils der Abstand zwischen der Dichtungsringschulter und dem Dichtungsring größer als der Abstand zwischen der Nut im Hochdruckkolben und dem Einlaß, (beziehungsweise einer mit dem Einlaß in Verbindung stehenden Öffnung im Abschnitt kleinen Durchmessers der Stufenbohrung).

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen Querschnitt durch ein zweistufiges Bremsventil entsprechend dem Stand der Technik und
- Fig. 2: einen Querschnitt durch ein erfindungsgemäßes zweistufiges Bremsventil.

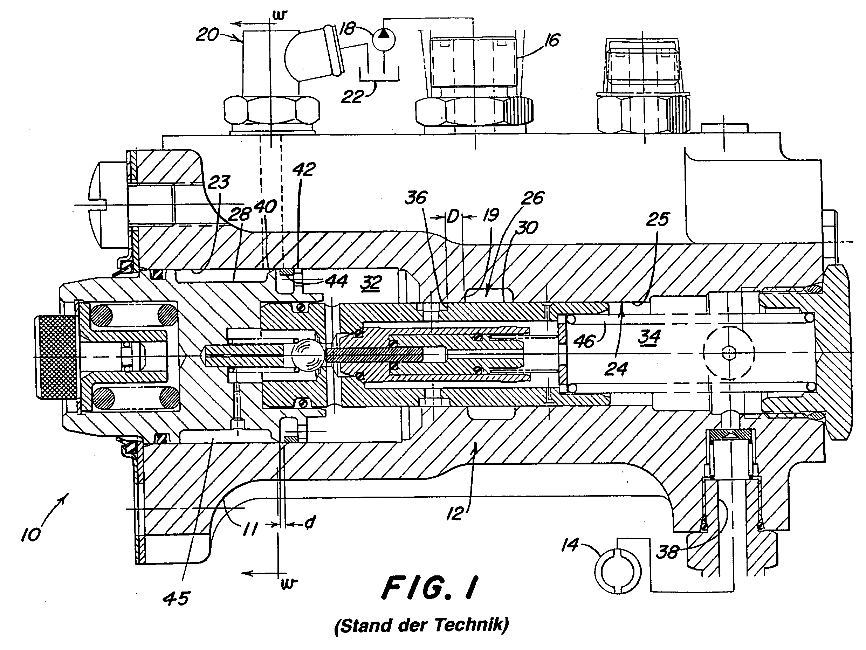

In Fig. 1 ist lediglich eine Seite einer Bremsanordnung 10 nach dem Stand der Technik dargestellt, die zwei zweistufige Bremsventile enthält. Das Gehäuse 11 nimmt ein linkes zweistufiges Bremsventil (das nicht dargestellt ist) und ein rechtes zweistufiges Bremsventil 12 auf, welche Flüssigkeitsdruck an einen (nicht gezeigten) linken und an einen rechten Bremsmechanismus 14 abgeben. Jedes Bremsventil 12 hat einen Einlaß 16, durch den es unter Druck stehende Bremsflüssigkeit von einer Pumpe 18 erhält, eine Einlaßnut 19, die mit dem Einlaß 16 in Verbindung steht, einen Vorratsbehälteranschluß 20, über den es mit einem Vorratsbehälter 22 in Verbindung steht, und eine Stufenbohrung 24 mit einem Abschnitt großen Durchmessers 23 und einem Abschnitt kleinen Durchmessers 25. Ein Stufenkolbenbauteil 26 umfaßt einen Vorfüllkolben 28 großen Durchmessers und einen Hochdruckkolben 30 kleineren Durchmessers. Die Stufenbohrung 24 und das Stufenkolbenbauteil 26 schließen eine Vorfüllkammer 32 mit großem Volumen und eine Hochdruckkammer 34 ein. Der Hochdruckkolben 30 weist eine Nut 36 auf, die über den Auslaß 38 mit dem Bremsmechanismus 14 in Verbindung steht. Die Nut 36 steht mit dem Einlaß 16 dann in Verbindung, wenn sich der Hochdruckkolben 30 um eine bestimmte Wegstrecke D aus seiner Ruhelage nach rechts (gemäß Fig. 1) bewegt hat, wobei er Flüssigkeit aus der Hochdruckkammer 30 zu dem Bremsmechanismus 14 drückt. Beidseits eines Dichtringes 44, der gleitbar an der Innenfläche der Bohrung 23 anliegt, weist der Vorfüllkolben 28 eine Dichtungsringschulter 40 bzw. eine zweite Ringschulter 42 auf. Die Dichtungsringschulter 40 tritt mit dem Dichtungsring 44 in dichtenden Eingriff, sofern der Vorfüllkolben 28 über die Wegstrecke d bewegt wird. Damit wird ein Durchgang zu einem Raum 45 im Vorfüllkolben 28 verschlossen, der mit dem Vorratsbehälter 22 in Verbindung steht. Bei einer weiteren Bewegung des Vorfüllkolbens 28 nach rechts (gemäß Fig. 1) wird Flüssigkeit aus der Vorfüllkammer 32 zu dem Bremsmechanismus 14 gefördert. Eine vorgespannte Feder 46 drückt das Stufenkolbenteil 26 nach links (gemäß Fig. 1) in seine Ruhelage.

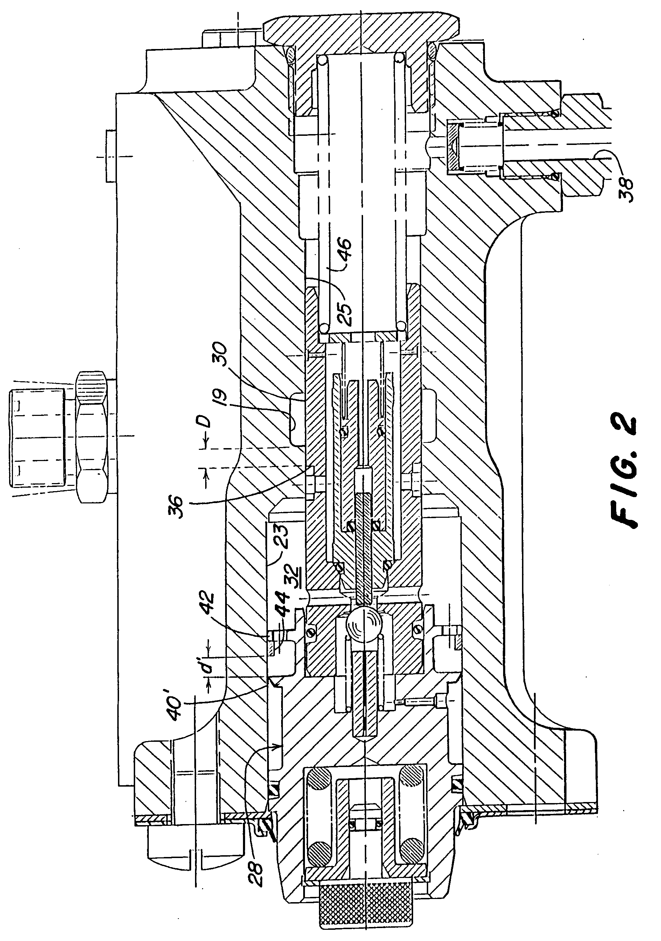

Bei dem erfindungsgemäßen Bremsventil, das in Fig. 2 dargestellt ist, ist in der Ruhelage des Stufenkolbenteils 26 die Wegstrecke d' zwischen der Dichtungsringschulter 40' und dem Dichtungsring 44 größer als die Wegstrecke D zwischen den Kanten der Nuten 19 und 36. Damit tritt die zweite Ringschulter 42 erst dann dichtend mit dem Dichtungsring 44 in Eingriff, wenn der Vorfüllkolben 28 über eine Wegstrecke d' nach rechts (gemäß Fig. 2) bewegt wurde und die Nut 36 mit dem Einlaß 16 in Verbindung tritt. Bei einer weiteren Bewegung des Vorfüllkolbens 28 nach rechts wird Flüssigkeit von der Vorfüllkammer 32 zu dem Bremsmechanismus gefördert.

Die erfindungsgemäße Ausbildung verhindert, daß die Dichtungsringschulter 40' mit dem Dichtungsring 44 in Eingriff tritt, während sich das Stufenkolbenteil 26 aus seiner Ruhelage bis in seine Druckaufbauposition bewegt, in der sich die Nuten 19 und 36 miteinander zu überlagern beginnen. Bei einer Überlagerung der Nuten 19 und 36 kann Flüssigkeit von der Pumpe 18 über den Einlaß 16, die Nuten 19 und 36, die Hochdruckkammer 34 und den Auslaß 38 in den Bremsmechanismus 14 gefördert werden, um diesen zu füllen. Die erfindungsgemäße Lösung bewirkt, daß während der anfänglichen Kolbenbewegung keine Flüssigkeit in der Vorfüllkammer 32 eingeschlossen bleibt und hier zu einem Druckaufbau führt. Damit kann ein schweres Pedalgefühl vermieden werden.

## Patentansprüche

1. Zweistufiges Bremsventil zur Versorgung wenigstens eines Bremsmechanismus (14) mit Flüssigkeitsdruck mit einem Einlaß (16), der zur Unterstützung des Vorfüllens des Bremsmechanismus (14) mit einer Druckquelle (18) in Verbindung steht, einem Vorratsbehälteranschluß (20), einer Stufenbohrung (24) und einem Stufenkolbenbauteil (26),
- wobei das Stufenkolbenbauteil (26) einen Vorfüllkolben (28) größeren Durchmessers und einen Hochdruckkolben (30) kleineren Durchmessers aufweist, mit der Stufenbohrung (24) eine Vorfüllkammer (32) großen Volumens und eine Hochdruckkammer (34) bildet, und aus einer Ruhelage verschiebbar ist, um Flüssigkeit an einen Bremsmechanismus (14) zu fördern,
- wobei der Hochdruckkolben (30) eine mit dem Bremsmechanismus (14) in Verbindung stehende Nut (36) aufweist, die dann mit dem Einlaß (16) verbunden wird, wenn der Hochdruckkolben (30) über eine bestimmte Wegstrecke (D) aus seiner Ruhelage verschoben wurde, um Flüssigkeit von der Hochdruckkammer (34) zu dem Bremsmechanismus (14) zu fördern,
- wobei der Vorfüllkolben (28) eine Dichtungsringschulter (40) und eine zweite Ringschulter (42) aufweist, die auf gegenüberliegenden Seiten eines Dichtungsringes (44), der gleitbar von der Stufenbohrung (24) aufgenommen wird, liegen, derart daß die Dichtungsringschulter (40) dichtend mit dem Dichtungsring (44) in Eingriff tritt, wenn der Vorfüllkolben (28) bewegt wird, um Flüssigkeit von der Vorfüllkammer (32) zu dem Bremsmechanismus zu fördern,
dadurch gekennzeichnet, daß in der Ruhelage des Stufenkolbenteils (26) der Abstand (d') zwischen der Dichtungsringschulter (40) und dem Dichtungsring (44) größer ist als der Abstand (D) zwischen der Nut (36) und dem Einlaß (16).

## Claims

1. A two-stage brake valve for supplying at least one brake mechanism (14) with fluid pressure, with an inlet (16) which is connected to a pressure source (18) for assisting the pre-filling of the brake mechanism (14), a reservoir port (20), a stepped bore (24) and a stepped piston components (26),
- wherein the stepped piston component (26) comprises a pre-filling piston (28) of greater diameter and a high-pressure piston (30) of smaller diameter, forms with the stepped bore (24) a pre-filling chamber (32) of large volume and a high-pressure chamber (34) and can be moved out of a position of rest in order to feed fluid to a brake mechanism (14),
- wherein the high pressure piston (30) comprises a groove (36) connected to the brake mechanism (14), which groove is connected to the inlet (16) when the high-pressure piston (30) is displaced by a certain stroke (D) out of its position of rest, in order to feed fluid from the high-pressure chamber (34) to the brake mechanism (14),
- wherein the pre-filling piston (28) has a sealing ring shoulder (40) and a second annular shoulder (42) which lie on opposite sides of a sealing ring (44), which is received slidably by the stepped bore (24), such that the sealing ring shoulder (40) comes into sealed engagement with the sealing ring (44) when the pre-filling piston (28) is moved in order to feed fluid from the pre-filling chamber (32) to the brake mechanism,
characterized in that the distance (d') between the sealing ring shoulder (40) and the sealing ring (44) in the position of rest of the stepped piston component (26) is greater than the distance (D) between the groove (36) and the inlet (16).

## Revendications

1. Soupape de freinage à deux étages servant à alimenter au moins un mécanisme de frein (14) avec une pression de liquide, comportant une entrée (16), qui est reliée à une source de pression (18) pour assister le remplissage préalable du mécanisme de frein (14), un raccord de réservoir (20), un perçage étagé (24) et un composant formant piston étagé (26),
- dans laquelle le composant formant piston étagé (26) comporte un piston de remplissage préalable (28) possédant un diamètre supérieur et un piston à haute pression (30) possédant un diamètre plus petit, forme avec le perçage étagé (24) une chambre de remplissage préalable (32) de volume important et une chambre à haute pression (34), et peut être déplacé à partir d'une position de repos pour refouler du liquide en direction d'un mécanisme de frein (14),
- dans laquelle le piston à haute pression (30) comporte une rainure (36) qui est en communication avec le mécanisme de frein et est reliée à l'entrée (16) lorsque le piston à haute pression (30) a été déplacé à partir de sa position de repos sur une distance déterminée (D), pour refouler du liquide depuis la chambre à haute pression (34) au mécanisme de frein (14),
- dans laquelle le piston de remplissage préalable (28) possède un épaulement (40) pour une bague d'étanchéité et un second épaulement (42) pour une bague, qui sont situés sur des cotés opposés d'une bague d'étanchéité (44), qui est logée de manière à pouvoir glisser dans le perçage étagé (24), de telle sorte que l'épaulement (40) pour la bague d'étanchéité s'applique d'une manière étanche contre la bague d'étanchéité (44) lorsque le piston de remplissage préalable (28) est déplacé pour refouler du liquide depuis la chambre de remplissage préalable (32) en direction du mécanisme de frein,
caractérisée en ce que lorsque la partie formant piston étagé (26) est dans la position de repos, la distance (d') entre l'épaulement (40) pour la bague d'étanchéité et la bague d'étanchéité (44) est supérieure à la distance (D) entre la rainure (36) et l'entrée (16).
